# EUROPÄISCHE PATENTANMELDUNG

(11) **EP 4 530 776 A1**
(43) Veröffentlichungstag der Anmeldung: **02.04.2025**
(21) Anmeldenummer: 23200422.6
(22) Anmeldetag: 28.09.2023
(51) Int. Cl.: G05B 19/418

(54) **SYNCHRONISATION UND KALIBRIERUNG EINES DIGITALEN ZWILLINGS MITTELS HASHWERTEN VON INTERVALLWERTEN**

(71) Anmelder: Siemens Aktiengesellschaft, 80333 München (DE)
(72) Erfinder: Denk, Martin, 85256 Vierkirchen (DE); Baudisch, Thomas, 86938 Schondorf am Ammersee (DE); Haager, Dominik, 83052 Bruckmühl (DE)
(74) Vertreter: Siemens Patent Attorneys

(57) **Zusammenfassung**

Die Nutzung Digitaler Zwillinge beim Betrieb von realen Vorrichtungen soll weiter verbessert werden. Dazu wird ein Verfahren zum Kalibrieren oder Synchronisieren vorgeschlagen, bei dem zunächst eine Referenz-Hashwert-Datenbank mit einer Vielzahl an Referenz-Hashwerten bereitgestellt wird (S2). In einer Betriebsphase erfolgt ein Erfassen je eines Prozesswerts (S3) für jeden von mehreren Prozessparametern in einem bestimmten Zustand der realen Vorrichtung. Jedem Prozesswert wird ein jeweiliger Intervallwert (7, 8, 11) eines jeweiligen Konfidenzintervalls (5, 6, 10) zugewiesen (S4), in dem der Prozesswert liegt. Aus den zugewiesenen Intervallwerten (7, 8, 11) wird für den bestimmten Zustand der realen Vorrichtung ein Hashwert gebildet (S5). Schließlich erfolgt ein Kalibrieren oder Synchronisieren des Digitalen Zwillings (S7) mit den erfassten Prozesswerten nur dann, wenn der gebildete Hashwert mit einem der Referenz-Hashwerte übereinstimmt.

## Beschreibung

Betriebsbegleitende Digitale Zwillinge werden heute, insbesondere auch im Kontext "Industrial Metaverse" immer wichtiger. Ein betriebsbegleitender Digitaler Zwilling (Digital Twin = DT) ist eine Simulation, die das reale System hinsichtlich der zu betrachtenden Aspekte realitätsgetreu abbildet und synchron z.B. vorrauseilend, parallel, oder schneller, gegebenenfalls in Echtzeit zum realen System läuft. Ziel des betriebsbegleitenden DT ist es, durch Vergleich der Zustände der realen Anlage mit denen des DT Abweichungen zu erkennen. Dabei wird der DT als Referenz, d. h. als Gutzustand, angenommen. Neben anderen Ursachen können Manipulationen an der realen Anlage die Ursache für Abweichungen sein. Eine mögliche Manipulation sind Cyberattacken. Ursachen für Differenzen vom Idealablauf können aber auch mechanische Belastungen, Verschleiß, etc. sein. Ebenso kann die fehlerhafte Übertragung von Signalen (Bit-Flip) Ursache von Abweichungen sein.

Die Anforderung hinsichtlich der realitätsgetreuen Abbildung ist technisch kaum oder nur mit sehr großem Aufwand erfüllbar. Daher wird es in der Realität zu Abweichungen kommen, insbesondere wenn der betriebsbegleitende Digitale Zwilling auf lange Zeit parallel zur realen Anlage läuft, ein Neustart der Anlage erforderlich ist oder ein manueller Eingriff stattgefunden hat, etc.. Diese machen von Zeit zu Zeit eine (Neu-)Kalibrierung bzw. Synchronisierung notwendig. Synchronisierung bedeutet, dass die Zustände des Digitalen Zwillings mit den Zuständen der realen Anlage überschrieben werden. Bei der Synchronisierung werden die Werte der Anlage lediglich übernommen, ohne Parameter des Zwillings anzupassen. Kalibrierung hingegen heißt, die Parameter des Digitalen Zwillings werden anhand des Anlagenzustands angepasst. Somit ist in der Regel in der Kalibrierung auch die Synchronisation enthalten.

D.h. in der Regel ist für die Kalibrierung auch eine Synchronisation notwendig ist, sodass die sichere Kalibrierung als Teilmenge auch die sichere Synchronisation enthält.

Im vorliegenden Dokument wird vielfach das Wort "Kalibrieren" einzeln verwendet als Abkürzung für "Kalibrieren oder Synchronisieren" ("Kalibration oder Synchronisation") bzw. "Kalibrieren und/oder Synchronisieren" ("Kalibration und/oder Synchronisation").

Bei der Kalibrierung besteht zum einen die Gefahr, dass die Zustände des DT mit manipulierten Zuständen der realen Anlage überschrieben werden. Es muss folglich sichergestellt werden, dass die Werte, die zur Kalibrierung genutzt werden, unverfälscht sind.

Zum anderen muss die Kalibrierung quasi in Echtzeit erfolgen, da sich die Zustände der realen Steuerung permanent ändern. Das heißt, die Prüfung der Unversehrtheit und Zulässigkeit der zur Kalibrierung zu verwendenden Werte muss sehr schnell erfolgen.

Die "Echtzeit", wie sie im vorliegenden Dokument verstanden wird, ist in DIN ISO/IEC 2382 wie folgt definiert: "Unter Echtzeit versteht man den Betrieb eines Rechensystems, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorbestimmten Zeitpunkten anfallen".

Die Kalibrierung Digitaler Zwillinge kann "online" oder "offline" erfolgen, wie die beiden nachfolgenden Publikationen zeigen. Online beschreibt die stetige Kalibrierung während des Betriebes sowie ein Update der Kalibrierung selbst. Offline beschreibt die Kalibrierung eines Digitalen Zwillings, dessen Modellzustände zwar geändert werden, dessen Modellparameter jedoch während des Betriebs nicht geändert werden. So wurden bei H. Song et al. Digitale Zwillinge für ein Atomkraftwerk aufgebaut und stetig über maschinelle Lern-Modelle kalibriert, um so die Qualität der Simulation über lange Laufzeit zu verbessern. Hierbei wurde offline eine FehlerDatenbank aus Simulationsdaten sowie aus echten Daten angelegt, mit der das datenbasierte Modell trainiert wurde. Zudem wurde online eine dynamische Datenbank aufgebaut, die stetig erweitert wurde.

Aus der Publikation Houde Song, Meiqi Song, Xiaojing Liu; Online autonomous calibration of digital twins using machine learning with application to nuclear power plants; Applied Energy, Volume 326, 2022, 119995, ISSN 0306-2619, https://doi.org/10.1016/j.apenergy.2022.119995. (https://www.sciencedirect.com/science/article/pii/S030626192 2012521) ist also die Anwendung eines Digitalen Zwilling im Bereich der Kernkrafttechnologie bekannt. Der digitale Zwilling ist eine Schlüsseltechnologie für die weitere Entwicklung von Kernenergieanwendungen. Der digitale Zwilling erfordert hochpräzise Echtzeitsimulationen, die die Möglichkeiten der derzeitigen Simulationsprogramme für Kernenergiesysteme übersteigen. Daher wird in dieser Studie eine autonome Kalibrierungsmethode für den digitalen Zwilling von Kernkraftwerken vorgeschlagen, um den Fehler in den Ergebnissen des digitalen Zwillings mit geringer Genauigkeit zu kompensieren, der schnell ausgeführt werden kann, um genauere Ergebnisse zu erhalten, die sowohl hohen Genauigkeits- als auch Echtzeitanforderungen genügen. Die vorgeschlagene Methode besteht aus einer Offline- und einer Online-Phase. In der Offline-Phase werden zunächst Simulationen des digitalen Zwillings durchgeführt. Die simulierten Daten und die entsprechenden Messdaten (oder realen Daten) werden verwendet, um eine Fehlerdatenbank zu erstellen, die für den nächsten Schritt der datengesteuerten Modellschulung verwendet wird. Um die Komplexität des Kalibrierungsmodells zu verringern, werden die Stichproben der Fehlerdatenbank anschließend durch Clustering gruppiert. Die datengesteuerten Kalibrierungsmodelle werden für jede Gruppe auf der Grundlage der simulierten Daten und Fehler erstellt. In der Online-Phase läuft der digitale Zwilling parallel zum Kernkraftwerk und empfängt Echtzeitdaten. Das Kalibrierungsmodell wird mithilfe einer dynamischen Fehlerdatenbank kontinuierlich aktualisiert. Die Durchführbarkeit der neu vorgeschlagenen Methode wurde anhand von Messdaten aus dem PKLIII B3.1 Dampferzeuger-Rohrbruchversuch (SGTR) nachgewiesen. Die Ergebnisse zeigten, dass die physikalischen Größen wie Druck, Temperatur und Massendurchfluss während des 1000-s-Parallelbetriebs gut kalibriert waren. Die R2-Werte aller physikalischen Größen, einschließlich Temperatur, Durchflussmenge und Druck, liegen über 0,99.

Eine Möglichkeit besteht im Einsatz von Modell-basierter Kalibrierung, bei der die Hyperparameter des Digitalen Zwillings an Real-Daten angepasst werden. Dies erfordert jedoch die mathematische Abbildung des Systemverhaltens.

Während bei H. Song so genannte maschinelle Lernverfahren für die Kalibrierung eingesetzt werden sollen, wurden bei R. Ward et al. (siehe unten) eine so genannte Bayes'sche Kalibrierung durchgeführt. Dabei wurde eine Kombination aus modellbasierter Priori-Information sowie datenbasierter Posteriori-Information eingesetzt. Falls keine Daten vorhanden sind, so wird für die Kalibrierung zunächst der modellbasierte Ansatz gewählt. Im laufenden Betrieb werden nun mit Daten die modellbasierte Kalibrierung über die Posteriori-Informationen erweitert.

Konkret ist die Kalibrierung eines digitalen Zwillings in dem folgenden Artikel beschrieben: Ward, R., Choudhary, R., Gregory, A., Jans-Singh, M., & Girolami, M. (2021). Continuous calibration of a digital twin: Comparison of particle filter and Bayesian calibration approaches. Data-Centric Engineering, 2, E15. doi:10.1017/dce.2021.12. Die Assimilation von kontinuierlich gestreamten Überwachungsdaten ist ein wesentlicher Bestandteil eines digitalen Zwillings. Die assimilierten Daten werden verwendet, um sicherzustellen, dass der digitale Zwilling das überwachte System so genau wie möglich darstellt. Eine Möglichkeit, dies zu erreichen, ist die Kalibrierung von Simulationsmodellen, unabhängig davon, ob es sich um datenbasierte oder physikalische Modelle oder eine Kombination aus beidem handelt. Eine herkömmliche manuelle Kalibrierung ist in diesem Zusammenhang nicht möglich. Daher wird eine Partikelfilter-Methode zur kontinuierlichen Kalibrierung des physikalisch basierten Modellelements eines digitalen Zwillings vorgestellt und auf ein Beispiel eines unterirdischen Bauernhofs angewandt. Die Methode wird auf ein synthetisches Problem mit bekannten Kalibrierungsparameterwerten angewandt, bevor sie in Verbindung mit überwachten Daten verwendet wird. Die vorgeschlagene Methodik wird mit statischen und sequentiellen Bayes'schen Kalibrierungsansätzen verglichen und schneidet im Hinblick auf die Bestimmung der Verteilung der Parameterwerte und der Analyselaufzeiten - beides wesentliche Anforderungen - gut ab. Die Methodik erweist sich als nützlich, um eine kontinuierliche Modelltreue zu gewährleisten.

Eine weitere Methode der Kalibrierung kann über so genannte PIMLs (Physical informed machine learning) erfolgen. Dabei werden physikalische Modelle mit maschinellem Lernen kombiniert, um eine Kalibrierung durchzuführen.

In diesen Anwendungen wird jedoch stets von einem sicheren Zustand der Kalibrierung ausgegangen. Fehlerhafte Zustände oder Daten werden dabei gänzlich ausgeschlossen. Finden sich Fehlerfälle oder sogar Cyberangriffe auf den Digitalen Zwilling, so ist die Kalibrierung oftmals fehlerhaft.

Die Aufgabe der vorliegenden Erfindung besteht somit darin, Kalibrierungen von Digitalen Zwillingen gegenüber Fehlerfällen und Cyberangriffen besser zu schützen.

Erfindungsgemäß wird diese Aufgabe durch ein Verfahren und ein System gemäß den unabhängigen Ansprüchen gelöst. Vorteilhafte Weiterbildungen der Erfindung ergeben sich aus den Unteransprüchen.

Die Erfindung basiert auf dem Gedanken, dass ein System nur dann kalibriert werden soll, falls sein Zustand als sicher gilt. Eine derartige sichere Konfiguration von Prozess- und Systembestandteilen soll als Hashwert niedergelegt werden. Der Hashwert wird dann zur Kalibrierung bzw. zur Synchronisation des Digitalen Zwillings verwendet.

Gemäß der vorliegenden Erfindung wird demnach ein Verfahren zum Kalibrieren oder Synchronisieren eines Digitalen Zwillings einer realen Vorrichtung bereitgestellt. Bei der realen Vorrichtung kann es sich um ein System beziehungsweise Anlage (z.B. Herstellungsanlage, Verarbeitungsanlage, Messvorrichtung etc.), gegebenenfalls auch um ein Teilsystem handeln. Die reale Vorrichtung stellt praktisch den realen Zwilling zu dem Digitalen Zwilling dar.

In einem Verfahrensschritt erfolgt ein Bereitstellen einer Referenz-Hashwert-Datenbank mit einer Vielzahl an Referenz-Hashwerten. Referenz-Hashwerte können die reale Vorrichtung in einem sicheren Zustand repräsentieren. In der Referenz-Hashwert-Datenbank können somit viele sichere Zustände der realen Vorrichtung in Form der Referenz-Hashwerte gespeichert sein. Eine Anlage beziehungsweise ein System kann in der Regel viele sichere Zustände einnehmen, in denen eine Kalibrierung durchgeführt werden kann.

In einem weiteren Schritt des erfindungsgemäßen Verfahrens erfolgt ein Erfassen je eines Prozesswerts für jeden von mehreren Prozessparametern (der realen Vorrichtung) in einem bestimmten Zustand der realen Vorrichtung. Ein Prozesswert kann ein Messwert oder z. B. auch ein Steuersignalwert sein. Der Prozesswert wird zu einem bestimmten Zeitpunkt in einem aktuellen Zustand erfasst. Da eine reale Vorrichtung in der Regel eine Vielzahl an Prozessparametern besitzt, muss für einen bestimmten beziehungsweise aktuellen Zeitpunkt eine entsprechende Anzahl an Prozesswerten (für jeden Prozessparameter ein Prozesswert) erfasst werden.

Anschließend wird jedem Prozesswert ein jeweiliger Intervallwert eines jeweiligen Konfidenzintervalls zugewiesen, in dem der Prozesswert liegt. Liegt beispielsweise ein Prozesswert in einem Konfidenzintervall, so wird der Prozesswert beispielsweise auf den Mittelwert des Konfidenzintervalls abgebildet. Auch ein anderer Prozesswert, der in diesem Konfidenzintervall liegt, wird auf diesen bestimmten Intervallwert (hier der genannte Mittelwert) abgebildet. Allen in dem Konfidenzintervall liegenden Prozesswerten wird also der entsprechende Intervallwert zugewiesen. Ein anderes Konfidenzintervall besitzt einen anderen Intervallwert (z. B. dessen Mittelwert). So werden die vielen Prozesswerte quasi klassifiziert, indem ihnen die jeweiligen Intervallwerte zugeordnet werden.

In einem weiteren Verfahrensschritt erfolgt ein Bilden eines Hashwerts aus den zugewiesenen Intervallwerten für den bestimmten Zustand der realen Vorrichtung. Ein bestimmter Zustand der realen Vorrichtung wird also beispielsweise durch eine Vielzahl an Intervallwerten repräsentiert, die sich aus den jeweiligen Prozesswerten ergeben. Aus dieser Vielzahl der Intervallwerte wird nun ein codierter Wert, nämlich der Hashwert, gebildet. Er repräsentiert damit den bestimmten beziehungsweise aktuellen Zustand der realen Vorrichtung, eines Teilsystems, oder einer einzelnen Komponente der Vorrichtung.

Schließlich erfolgt ein Kalibrieren des Digitalen Zwillings mit den erfassten Prozesswerten nur dann, wenn der gebildete Hashwert mit einem der Referenz-Hashwerte übereinstimmt. Vorzugsweise werden in der Referenz-Hashwert-Datenbank nur Referenz-Hashwerte abgespeichert, die einen sicheren Zustand repräsentieren. Falls nun der aktuell gebildete Hashwert einem der Referenz-Hashwerte entspricht, ist der aktuelle Zustand der realen Vorrichtung ebenfalls ein sicherer Zustand. Die Referenz-Hashwerte können aber auch andere Zustände repräsentieren. Beispielsweise soll eine Kalibrierung immer nur dann erfolgen, wenn ein bestimmter Zählerstand erreicht ist, oder wenn sich ein bestimmter Bediener im System eingeloggt hat. Auch diese Zustände können sich im Hashwert widerspiegeln, so dass nur bei Übereinstimmung mit den Referenz-Hashwerten eine Kalibrierung durchgeführt wird.

Der besondere Vorteil der Kalibrierung mittels Hashwerten liegt darin, dass sehr komplexe Prozesszustände relativ rasch festgestellt werden können, um eine Kalibrierung des Digitalen Zwillings gegebenenfalls in Echtzeit durchführen zu können.

In einem Ausführungsbeispiel ist vorgesehen, dass jeder Referenz-Hashwert aus Prozesswerten der realen Vorrichtung in einem vorbestimmten Zustand gewonnen wird. Derartige vorbestimmte Zustände wurden oben bereits angedeutet. Insbesondere handelt es sich bei dem vorbestimmten Zustand um einen sicheren Zustand der realen Vorrichtung, in dem der Betrieb der realen Vorrichtung in bestimmungsgemäßer Weise erfolgt. Das System beziehungsweise die reale Vorrichtung ist beispielsweise für einen bestimmungsgemäßen Betrieb ausgelegt. Nur wenn dieser bestimmungsgemäße Betrieb (sicherer Zustand) der realen Vorrichtung nicht verlassen wird, kann eine Kalibrierung des Digitalen Zwillings erfolgen. Die Referenz-Hashwerte werden somit in einer sicheren Lernphase ermittelt und die Kalibrierung wird auf sichere Zustände beschränkt. Alternativ kann die Kalibrierung entsprechend auch auf andere vorbestimmte Zustände beschränkt werden.

In einem weiteren Ausführungsbeispiel werden die Referenz-Hashwerte in einem vorbestimmten Zeitraum gewonnen. Der Beginn des Zeitraums kann beispielsweise in einen sicheren Betriebszustand der realen Vorrichtung gelegt werden. Das bedeutet, dass erst dann Referenz-Hashwerte gewonnen werden, wenn sich die reale Vorrichtung in einem vorbestimmten, z.B. sicheren Zustand befindet. Die Länge des Zeitraums kann von der Komplexität des Prozesses und der Umgebung abhängen. Je komplexer und länger der eigentliche Prozess dauert, desto aufwendiger kann das Gewinnen der Referenz-Hashwerte sein. Der Vorteil des vorbestimmten Zeitraums liegt darin, dass das Gewinnen der Referenz-Hashwerte nach dem Zeitraum abgeschlossen ist, wodurch auch die Menge der Referenz-Hashwerte abgeschlossen ist, und damit beispielsweise eine abgeschlossene Menge an sicheren Zuständen definiert ist.

In einem weiteren Ausführungsbeispiel ist vorgesehen, dass je mindestens ein Konfidenzintervall für mehrere Prozessparameter der realen Vorrichtung ermittelt wird, wobei jedem Konfidenzintervall ein jeweiliger Intervallwert zugeordnet ist. In der Regel werden einem Prozessparameter mehrere Konfidenzintervalle zugeordnet, wenn dieser einen größeren Wertebereich einnehmen kann. In diesem Fall wird also der gesamte Wertebereich des Prozessparameters in mehrere Konfidenzintervalle unterteilt. Jedem Konfidenzintervall ist ein Intervallwert, z. B. Mittelwert des Konfidenzintervalls, zugeordnet. Damit kann der gesamte Wertebereich des Prozessparameters auf wenige Intervallwerte abgebildet werden. Auf die gleiche oder ähnliche Weise werden auch die Referenz-Hashwerte mit den gleichen Konfidenzintervallen gewonnen werden. So können auch in der Lernphase den sicheren Prozesswerten entsprechende Intervallwerte zugeordnet werden, aus denen sich dann die Referenz-Hashwerte bilden lassen.

In einem Ausführungsbeispiel befindet sich die reale Vorrichtung bei dem Ermitteln der Konfidenzintervalle in einem statischen Ruhezustand (ein einziger Arbeitspunkt). Dies bedeutet, dass sich die reale Vorrichtung nicht in dem an sich vorgesehenen Betrieb befindet. Vielmehr werden beispielsweise lediglich Sensorwerte im Ruhezustand erfasst. Diese Sensorwerte geben dann beispielsweise das Rauschen eines Sensors wieder. Dieses Rauschen der Sensorwerte kann dazu genutzt werden, die Breite des Konfidenzintervalls zu definieren. Analog können auch bei zyklischen Anwendungen die Konfidenzintervalle über die Betriebszustände gebildet werden, wobei hier sichergestellt werden sollte, dass der Zyklus in der Lernphase bzw. Aufzeichnungsphase synchron zueinander läuft.

Bei einem weiteren Ausführungsbeispiel ist vorgesehen, dass jeder Prozessparameter ein Sensorwert, ein Zustandswert (z.B. ein Aktorwert) oder ein Steuersignalwert ist. Die vielen Prozessparameter, die erfasst werden, können also eine Kombination aus den genannten Werten sein. Gegebenenfalls können die Prozessparameter aber auch nur von einem einzigen Typ (z. B. Sensorwert) sein, oder aber ihre Menge stellt eine Mischung aus mehreren der genannten Typen dar. Bei den Zustandswerten kann es sich beispielsweise um einen SPS-Zustand oder um eine Ventilstellung oder dergleichen handeln. Bei dem Steuersignalwert kann es sich beispielsweise um einen Digitalwert eines Eingangs- oder Ausgangssignals handeln.

Gemäß einer anderen Ausführungsform erfolgt das Zuweisen jedes Prozesswerts zu dem jeweiligen Intervallwert des jeweiligen Konfidenzintervalls über eine statistische Verteilung. Beispielsweise wird die Breite des Konfidenzintervalls durch die Standardabweichung festgelegt. Bei der Verteilung kann es sich um eine Normalverteilung, eine Poisson-Verteilung, eine Exponentialverteilung oder eine andere Wahrscheinlichkeitsverteilung handeln. Mit einer derartigen Verteilung lässt sich die Zuweisung jedes Prozesswerts zu einem Intervallwert zuverlässig gestalten.

In einem besonders bevorzugten Ausführungsbeispiel erfolgt das Kalibrieren des Digitalen Zwillings in Echtzeit. Dies bedeutet, dass der digitale Zwilling mit nahezu den aktuellen Werten der Anlage parallel läuft.

Die oben genannte Aufgabe wird erfindungsgemäß auch gelöst durch ein System mit einer realen Vorrichtung (realer Zwilling) und einem zu kalibrierenden digitalen Zwilling, gekennzeichnet durch
- eine Speichereinrichtung ausgebildet zum Bereitstellen einer Referenz-Hashwert-Datenbank mit einer Vielzahl an Referenz-Hashwerten,
- eine Erfassungseinrichtung ausgebildet zum Erfassen je eines Prozesswerts (z.B. Messwerts oder Steuersignalwert in einem bestimmten/aktuellen Zustand) für jeden von mehreren Prozessparametern (der realen Vorrichtung) in einem bestimmten Zustand der realen Vorrichtung,
- eine Recheneinrichtung ausgebildet zum Zuweisen jedes Prozesswerts zu einem jeweiligen Intervallwert eines (von mehreren) jeweiligen Konfidenzintervalls, in dem der Prozesswert liegt, sowie zum Bilden eines Hashwerts aus den zugewiesenen Intervallwerten für den bestimmten Zustand der realen Vorrichtung und
- eine Kalibrationseinrichtung ausgebildet zum Kalibrieren oder Synchronisieren des digitalen Zwillings mit den erfassten Prozesswerten nur dann, wenn der gebildete Hashwert mit einem der Referenz-Hashwerte übereinstimmt.

Die Speichereinrichtung kann Speicherelemente und gegebenenfalls einen eigenen Prozessor beinhalten. Die Erfassungseinrichtung kann beispielsweise einen oder mehrere Sensoren und gegebenenfalls auch einen oder mehrere Steuerelemente aufweisen. Die Recheneinrichtung kann einen oder mehrere Prozessoren aufweisen. Die Kalibrationseinrichtung kann einteilig mit der Recheneinrichtung gebildet sein oder einen eigenen Prozessor beispielsweise Speicher aufweisen.

Die oben im Zusammenhang mit dem erfindungsgemäßen Verfahren genannten Vorteile und Weiterbildungsmöglichkeiten gelten sinngemäß auch für das erfindungsgemäße System. Die geschilderten Verfahrensmerkmale können dementsprechend funktionelle Merkmale des Systems darstellen.

Es kann auch eine Anlage mit mehreren oben genannten Systemen bereitgestellt werden, wobei jedes der Systeme dazu ausgebildet ist, jeweils für sich den entsprechenden Digitalen Zwilling zu kalibrieren. Weist beispielsweise ein System mehrere Teilsysteme auf, so kann das oben genannte Verfahren für jedes Teilsystem separat durchgeführt werden. Besitzt beispielsweise das System mehrere Fräsmaschinen, so kann jede Fräsmaschine von ihrem individuellen Digitalen Zwilling begleitet werden. Jeder Digitale Zwilling kann dann unabhängig von den anderen Digitalen Zwillingen separat kalibriert werden. Alternativ kann das Gesamtsystem auch von einem einzigen Digitalen Zwilling begleitet werden. In diesem Fall repräsentiert der Digitale Zwilling beispielsweise eine Mehrzahl an Fräsmaschinen. Aufgrund der Komplexität eines Systems kann es jedoch sinnvoll sein, dieses in Teilsysteme aufzuteilen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Ebenso kann ein Computerprogramm bereitgestellt werden, das Befehle aufweist, welche bei Ausführung in dem genannten System dieses veranlassen, das geschilderte Verfahren auszuführen.

Unabhängig vom grammatikalischen Geschlecht eines bestimmten Begriffes sind Personen mit männlicher, weiblicher oder anderer Geschlechteridentität mit umfasst.

Die vorliegende Erfindung wird nun anhand der beigefügten Zeichnungen näher erläutert, in denen zeigen:
- FIG 1: ein Schema zur Bestimmung eines Konfidenzintervalls;
- FIG 2: eine schematische Darstellung einer Lern- und Betriebsphase;
- FIG 3: ein erstes Sensorsignal;
- FIG 4: ein zweites Sensorsignal;
- FIG 5: ein drittes Sensorsignal;
- FIG 6: ein viertes Sensorsignal mit unsicherem Bereich; und
- FIG 7: ein schematisches Ablaufdiagramm eines beispielhaften Verfahrens.

Die nachfolgend näher geschilderten Ausführungsbeispiele stellen bevorzugte Ausführungsformen der vorliegenden Erfindung dar.

Die Erfindung beruht auf dem Gedanken, dass ein digitales System (Digitaler Zwilling) nur dann kalibriert werden kann, wenn der Zustand des korrespondierenden realen Systems (realer Zwilling) als "sicher" freigegeben wird. Dazu werden in einem Ausführungsbeispiel in einer Lernphase entsprechende sichere Zustände der realen Vorrichtung beziehungsweise des realen Systems gespeichert. Die sicheren Zustände werden als Referenz-Hashwerte in einer Referenz-Hashwert-Datenbank abgelegt.

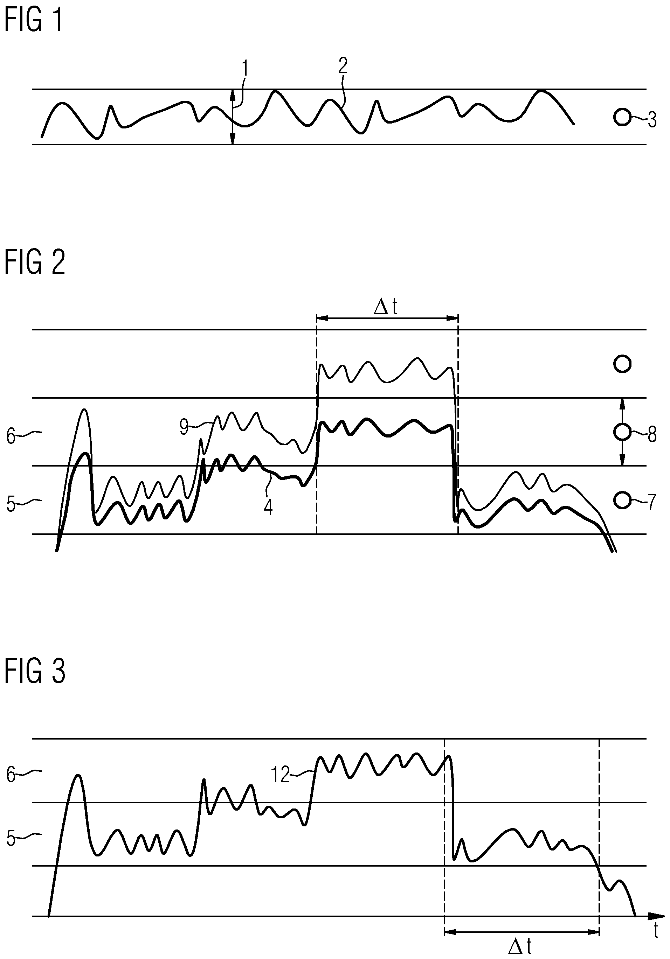

In dieser Lernphase kann beispielsweise für einen Sensor ein Konfidenzintervall 1 gemäß FIG 1 ermittelt werden. Dazu wird beispielsweise ein Sensorsignal als zeitlich abhängiger Prozesswert 2 erfasst. Der Prozesswert 2 schwankt in dem Konfidenzintervall 1. Beispielsweise wird das Konfidenzintervall 1 mit einer bestimmten Wahrscheinlichkeitsverteilung gebildet. Insbesondere kann die Breite des Konfidenzintervalls beispielsweise durch die Standardabweichung oder Quantile bestimmt werden.

Bei dem Prozesswert handelt es sich also beispielsweise um den Wert eines Sensorsignals. Ein Sensorsignal ist typischerweise verrauscht. Obwohl das Sensorsignal beispielsweise in einem Ruhestand der realen Vorrichtung aufgenommen wird, unterliegt es einer Schwankung, insbesondere dem Rauschen.

Dem Konfidenzintervall 1 wird ein Intervallwert 3 zugeordnet. Bei diesem Intervallwert 3 handelt es sich beispielsweise um den Mittelwert des verrauschten Sensorsignals oder den Mittelwert aus mehreren zyklisch erfassten Betriebszuständen. So lange sich das Sensorsignal beziehungsweise der Prozesswert 2 in dem Konfidenzintervall 1 aufhält, kann ihm der Intervallwert 3 zugeordnet werden.

In der Lernphase sollen nun sichere Zustände der realen Vorrichtung gelernt werden. Dazu wird die reale Vorrichtung in einen oder mehrere sichere Zustände gebracht. FIG 2 zeigt hierzu beispielsweise ein Sensorsignal 4 im sicheren Zustand. Das Sensorsignal 4 nimmt hier Werte in einem ersten Konfidenzintervall 5 und in einem zweiten Konfidenzintervall 6 ein. Dem ersten Konfidenzintervall 5 ist ein erster Intervallwert 7 und dem zweiten Konfidenzintervall 6 ein zweiter Intervallwert 8 zugeordnet. Bei dem ersten Intervallwert 7 handelt es sich beispielsweise um den Mittelwert des ersten Konfidenzintervalls 5 und bei dem zweiten Intervallwert 8 handelt es sich beispielsweise um den Mittelwert des zweiten Konfidenzintervalls 6.

Sobald sich das Sensorsignal 4 im ersten Konfidenzintervall 5 befindet, kann ihm der erste Intervallwert 7 zugeordnet werden. In gleicher Weise kann dem Sensorsignal 4 der zweite Intervallwert 8 zugeordnet werden, wenn es sich in dem zweiten Konfidenzintervall 6 befindet.

Da die reale Vorrichtung in dem sicheren Zustand nur ein Sensorsignal 4 liefert, das sich in dem ersten Konfidenzintervall 5 oder dem zweiten Konfidenzintervall 6 aufhält, werden diese beiden Konfidenzintervalle beziehungsweise ihre Intervallwerte 7 und 8 als sicher eingestuft.

Ein jeweils aktueller Zustand der realen Vorrichtung wird als Hashwert gespeichert, der eine Vielzahl an Prozesswerten entsprechend vieler Prozessparameter beinhaltet. Beispielsweise ist einer dieser Prozessparameter das Sensorsignal 4. Dieser Prozessparameter wird mit dem ersten Intervallwert 7 in einem Hashwert codiert, wenn der Sensorsignalwert, d. h. der Prozesswert, sich in dem ersten Konfidenzintervall 5 befindet. Andernfalls, wenn sich der Sensorsignalwert im zweiten Konfidenzintervall 6 befindet, wird der Prozessparameter mit dem zweiten Intervallwert 8 im Hashwert codiert. Ähnliches gilt für andere Prozessparameter wie Messwerte und Zustände.

Nur Hashwerte, die mit dem ersten Intervallwert 7 oder dem zweiten Intervallwert 8 codiert sind, gelten in diesem Beispiel als sicher und werden als Referenz-Hashwerte in der Referenz-Hashwert-Datenbank abgespeichert.

In der Lernphase werden beispielsweise für einen bestimmten Zeitraum, der gegebenenfalls von der Komplexität der Umgebung und des Prozesses abhängt, Daten gesammelt. Dazu zählen alle Prozessvariablen beziehungsweise Prozessparameter, die im Zusammenhang mit der realen Vorrichtung stehen. Hierzu können unter anderem Eingabe-/Ausgabe-Signale, alle erfassbaren physikalischen Werte und interne SPS-Zustände etc. gehören. Diese werden beispielsweise über einen festzulegenden Zeitraum in einem jeweiligen Referenz-Hashwert gesichert, der vorzugsweise einen sicheren Zustand repräsentiert.

In der Betriebsphase können die gelernten Signalwerte genutzt werden. Insbesondere kann das System im laufenden Betrieb nur kalibriert werden, wenn sich der aktuelle Zustand in der Nähe eines Zustands im zugrundeliegenden Datensatz befindet. Hierzu zeigt FIG 2 ein Sensorsignal 9 in der Betriebsphase. Wie gut zu erkennen ist, verlässt das Sensorsignal 9 in der Betriebsphase das zweite Konfidenzintervall 6 in einem Zeitraum Δt. In diesem Zeitraum Δt wird das Sensorsignal 9 einem dritten Konfidenzintervall 10 zugeordnet, welchem seinerseits ein dritter Intervallwert 11 (z. B. Mittelwert des dritten Konfidenzintervalls) zugeordnet ist.

Während des Zeitraums Δt wird dem Sensorsignal 9 in der Betriebsphase also der dritte Intervallwert 11 zugeordnet. Mit diesem Intervallwert 11 wird für den Zeitraum Δt ein Hashwert gebildet. Dieser Hashwert stimmt aber mit keinem der Referenz-Hashwerte aus der Referenz-Hashwert-Datenbank überein. Daher wird der Zustand des Systems in dem Zeitraum Δt als unsicher beurteilt. Damit erfolgt in dem Zeitraum Δt keine Freigabe für eine Kalibrierung, da sich das System in einem unsicheren Zustand befindet.

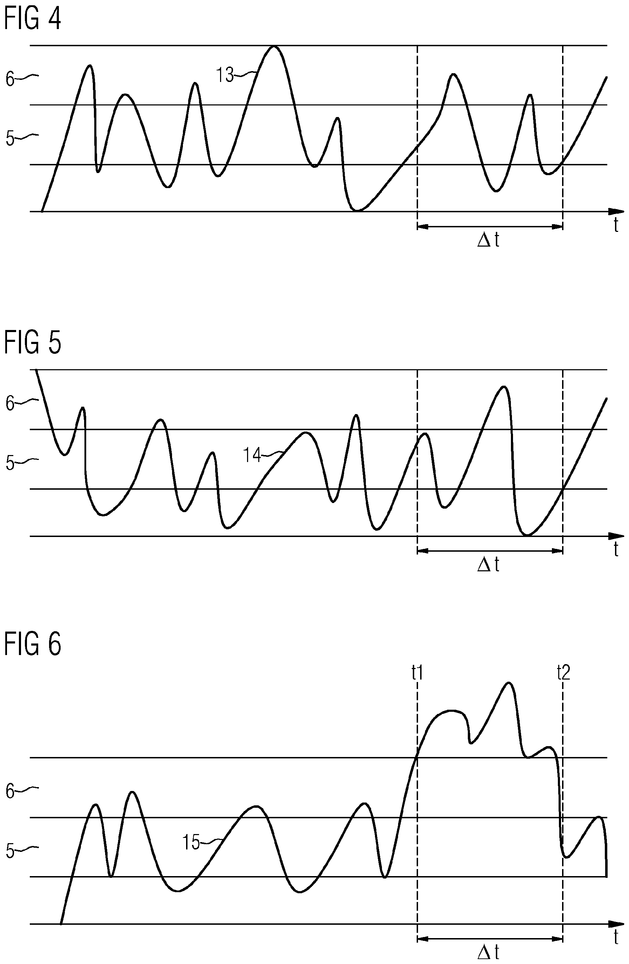

Ein weiteres Ausführungsbeispiel wird im Zusammenhang mit den FIG 3 bis 6 nachfolgend erläutert. Das zu kalibrierende System besitzt hier exemplarisch vier Sensoren. Die vier Sensoren liefern ein erstes Sensorsignal 12 (FIG 3), ein zweites Sensorsignal 13 (FIG 4), ein drittes Sensorsignal 14 (FIG 5) und ein viertes Sensorsignal 15 (FIG 6). Jedes Sensorsignal besitzt seine eigenen Konfidenzintervalle. Der Einfachheit halber werden hier für alle Sensorsignale 12 bis 15 zwei gleiche Konfidenzintervalle angenommen, nämlich das erste Konfidenzintervall 5 und das zweite Konfidenzintervall 6. Keines der Sensorsignale 12, 13 und 14 übersteigt die beiden Konfidenzintervalle 5 und 6. Eine Ausnahme stellt das vierte Sensorsignal 15 dar, das das zweite Konfidenzintervall 6 zum Zeitpunkt t1 übersteigt. Erst zum Zeitpunkt t2 fällt das vierte Sensorsignal 15 wieder sicher in das zweite Konfidenzintervall 6. Auch hier werden nur die Signale in dem ersten und zweiten Konfidenzintervall 5, 6 als sicher beurteilt. Demzufolge gilt das vierte Sensorsignal 15 in dem Zeitraum Δt zwischen dem ersten Zeitpunkt t1 und dem zweiten Zeitpunkt t2 als unsicher.

Auch hier werden den Analogwerten über eine statistische Verteilung (z. B. Normalverteilung) jeweils ein fixer Wert in einem entsprechenden, automatisiert erfassten Konfidenzintervall zugeordnet. Befinden sich die Sensordaten zu einem Zeitpunkt, an dem die Kalibrierung angefordert wurde, innerhalb der festgelegten Konfidenzintervalle, so ist der aus allen Einzelzuständen (Sensorwerte etc.) gebildete aktuelle Hashwert identisch mit einem in der Lernphase gebildeten Referenz-Hashwert und es kann eine Freigabe zur Kalibrierung erfolgen, da sich das Gesamtsystem in einem sicheren Zustand befindet. Dieser sichere Zustand des Gesamtsystems ist in dem Beispiel der FIG 3 bis 6 bis zum ersten Zeitpunkt t1 und nach dem zweiten Zeitpunkt t2 gegeben. In dem Zeitraum Δt dazwischen befinden sich zwar das erste Sensorsignal 12, das zweite Sensorsignal 13 und das dritte Sensorsignal 14 in einem sicheren Konfidenzintervall, aber das vierte Sensorsignal 15 hat die sicheren Konfidenzintervalle 5 und 6 verlassen. Daher befindet sich das Gesamtsystem nicht in einem sicheren Zustand und eine Kalibrierung wird nicht freigegeben.

Bei einer alternativen Ausführungsform kann vorgesehen sein, dass nur ein Teilsystem, dessen Prozesswert(e) nicht sicher ist/sind, nicht kalibriert werden darf. Alle anderen Teilsysteme, deren Prozesswert(e) sicher sind, können auch entsprechend kalibriert werden.

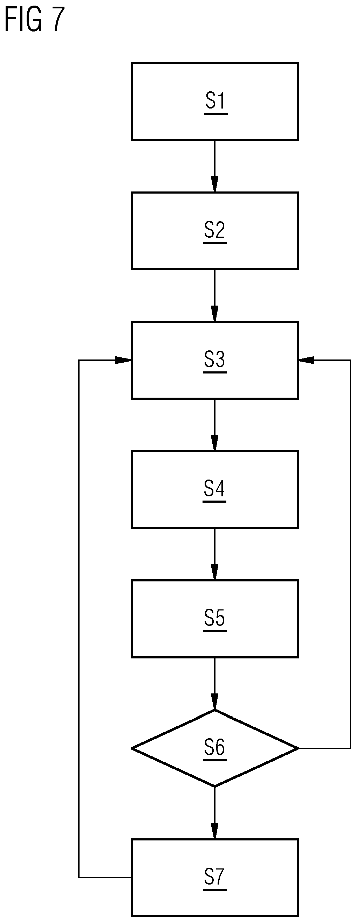

In FIG 7 ist ein schematisches Ablaufdiagramm eines Ausführungsbeispiels eines erfindungsgemäßen Verfahrens dargestellt. Die beiden Schritte S1 und S2 repräsentieren die Lernphase. Dabei werden beispielsweise in einem Ruhezustand eines oder mehrere Konfidenzintervalle für die jeweiligen Prozesswerte der Prozessparameter eines Systems ermittelt. In dem anschließenden Schritt S2 wird eine Referenz-Hashwert-Datenbank für sichere Zustände des Systems gewonnen. Dazu werden in einer sicheren Betriebsphase den jeweiligen Prozesswerten mittels der Konfidenzintervalle entsprechende Intervallwerte zugeordnet, aus denen Referenz-Hashwerte für die sicheren Zustände gewonnen werden. Ein Hashwert spiegelt dabei in der Regel sämtliche Prozesswerte beziehungsweise Prozessparameter des Systems wider.

Die Schritte S3 bis S7 symbolisieren die Betriebsphase. In Schritt S3 werden die Prozesswerte der verschiedenen Prozessparameter des Systems erfasst. Dabei kann es sich um Analogwerte aber auch um Digitalwerte handeln. In einem anschließenden Schritt S4 erfolgt eine Zuweisung der Prozesswerte zu einem jeweiligen Intervallwert. Dieser Intervallwert repräsentiert günstigerweise das Konfidenzintervall, in dem sich der Prozesswert befindet. Analoge Prozesswerte werden beispielsweise über eine statistische Verteilung dem Intervallwert zugeordnet, während digitale Werte in der Regel einer solchen Zuordnung nicht bedürfen. In diesem Fall entspricht der Prozesswert dem Intervallwert und eine spezielle Zuweisung mit Werteänderung ist nicht erforderlich.

In einem folgenden Schritt S5 erfolgt das Bilden eines Hashwerts aus allen Intervallwerten, die die Prozesswerte in einem Zustand des Systems repräsentieren. In einem Schritt S6 wird überprüft, ob der soeben gebildete aktuelle Hashwert mit einem Referenzwert aus der Referenz-Hashwert-Datenbank übereinstimmt. Nur wenn dies der Fall ist, wird ein Kalibrieren des Digitalen Zwillings der realen Vorrichtung beziehungsweise des realen Systems in Schritt S7 freigegeben. Der Digitale Zwilling wird dann beispielsweise mit den Intervallwerten, die sich hinter dem aktuellen Hashwert verbergen, kalibriert. Anschließend kann gegebenenfalls mit einer vorgegebenen Zeitverzögerung wieder zu Schritt S3 gesprungen werden, um neue Prozesswerte zu erfassen. Dieser Kalibriervorgang kann beispielsweise einmal täglich, einmal monatlich und so weiter durchgeführt werden.

Wenn bei der Überprüfung in Schritt S6 festgestellt wird, dass der aktuelle Hashwert keinem der Referenz-Hashwerte aus der Referenz-Hashwert-Datenbank entspricht, so kann ohne den Kalibrierschritt S7 direkt wieder zu Schritt S3 gegebenenfalls auch mit einer Zeitverzögerung zurückgesprungen werden.

Die obigen Ausführungsformen zeigen die Kalibrierung eines Simulationsmodells beziehungsweise Digitalen Zwillings direkt mit Werten einer realen Anlage. Hierdurch soll sichergestellt sein, dass der Digitale Zwilling sich wieder so verhält, wie die wirkliche Anlage. Der wesentliche Aspekt der erfindungsgemäßen Ausführungsbeispiele besteht in der Beschränkung dieser Kalibrierung auf sichere Zustände. Über das Speichern der Systemzustände als einzelne Hashwerte kann gegebenenfalls Echtzeitverhalten erreicht werden. Damit ist besonders im betriebsbegleitenden Zustand eine effiziente Lösung möglich, bei der eine Vielzahl an Zuständen mit der realen Anlage abgeglichen werden können. Würde die Feststellung eines sicheren Zustands zu lange dauern, so ist eine Kalibrierung gegebenenfalls nicht mehr sinnvoll, da der Zustand der Anlage zu weit fortgeschritten ist. Als besonders vorteilhaft gilt auch, dass bei dem vorgestellten Verfahren neben physikalischen Werten ebenso Werte aus der Steuerungstechnik mit in den Zustand aufgenommen werden können. Damit kann die Funktionsfähigkeit beziehungsweise Sicherheit einer Gesamtanlage noch detaillierter überprüft werden.

## Patentansprüche

1. Verfahren zum Kalibrieren oder Synchronisieren eines digitalen Zwillings einer realen Vorrichtung
**gekennzeichnet durch**
- Bereitstellen einer Referenz-Hashwert-Datenbank (S2) mit einer Vielzahl an Referenz-Hashwerten,
- Erfassen je eines Prozesswerts (S3) für jeden von mehreren Prozessparametern in einem bestimmten Zustand der realen Vorrichtung,
- jedem Prozesswert Zuweisen (S4) eines jeweiligen Intervallwerts (7, 8, 11) eines jeweiligen Konfidenzintervalls (5, 6, 10),
- Bilden eines Hashwerts (S5) aus den zugewiesenen Intervallwerten (7, 8, 11) für den bestimmten Zustand der realen Vorrichtung und
- Kalibrieren oder Synchronisieren des digitalen Zwillings (S7) mit den erfassten Prozesswerten nur dann, wenn der gebildete Hashwert mit einem der Referenz-Hashwerte übereinstimmt.

2. Verfahren nach Anspruch 1, wobei jeder Referenz-Hashwert aus Prozesswerten der realen Vorrichtung in einem vorbestimmten Zustand gewonnen wird.

3. Verfahren nach Anspruch 1 oder 2, wobei die Referenz-Hashwerte in einem vorbestimmten Zeitraum gewonnen werden.

4. Verfahren nach einem der vorhergehenden Ansprüche, wobei je mindestens ein Konfidenzintervall (5, 6, 10) für mehrere Prozessparameter der realen Vorrichtung ermittelt wird, und wobei jedem Konfidenzintervall (5, 6, 10) ein jeweiliger Intervallwert (7, 8, 11) zugeordnet ist.

5. Verfahren nach Anspruch 4, wobei sich die reale Vorrichtung bei dem Ermitteln der Konfidenzintervalle (5, 6, 10) in einem statischen Ruhezustand befindet.

6. Verfahren nach einem der vorhergehenden Ansprüche, wobei jeder Prozessparameter ein Sensorwert, ein Aktorwert, ein Zustandswert oder Steuersignalwert ist.

7. Verfahren nach einem der vorhergehenden Ansprüche, wobei das Zuweisen jedes Prozesswerts zu dem jeweiligen Intervallwert (7, 8, 11) des jeweiligen Konfidenzintervalls (5, 6, 10) über eine statistische Verteilung erfolgt.

8. Verfahren nach einem der vorhergehenden Ansprüche, wobei das Kalibrieren oder Synchronisieren des digitalen Zwillings in Echtzeit erfolgt.

9. System mit einer realen Vorrichtung(realer Zwilling) und einem zu kalibrierenden oder zu synchronisierenden digitalen Zwilling,
**gekennzeichnet durch**
- eine Speichereinrichtung ausgebildet zum Bereitstellen einer Referenz-Hashwert-Datenbank mit einer Vielzahl an Referenz-Hashwerten,
- eine Erfassungseinrichtung ausgebildet zum Erfassen je eines Prozesswerts für jeden von mehreren Prozessparametern in einem bestimmten Zustand der realen Vorrichtung,
- eine Recheneinrichtung ausgebildet zum Zuweisen jedes Prozesswerts zu einem jeweiligen Intervallwert (7, 8, 11) eines jeweiligen Konfidenzintervalls (5, 6, 10), in dem der Prozesswert liegt, sowie zum Bilden eines Hashwerts aus den zugewiesenen Intervallwerten (7, 8, 11) für den bestimmten Zustand der realen Vorrichtung und
- eine Kalibrationseinrichtung ausgebildet zum Kalibrieren oder Synchronisieren des digitalen Zwillings mit den erfassten Prozesswerten nur dann, wenn der gebildete Hashwert mit einem der Referenz-Hashwerte übereinstimmt.

10. Anlage mit mehreren Systemen nach Anspruch 9, wobei jedes der Systeme dazu ausgebildet ist, jeweils für sich den entsprechenden digitalen Zwilling zu kalibrieren oder zu synchronisieren.
